# EUROPEAN PATENT APPLICATION

(11) **EP 4 083 169 A1**
(43) Date of publication of application: **02.11.2022**
(21) Application number: 20842663.5
(22) Date of filing: 31.03.2020
(51) Int. Cl.: C10B 57/12, C10B 55/00, B01D 19/04

(54) **DEFOAMER COMPOSITION FOR REDUCING HYDROCARBON FOAM AND SILICONE CARRYOVER**

(30) Priority: 23.12.2019 KR 20190173022
(71) Applicant: Hyundai Oilbank Co., Ltd., Seosan-si, Chungcheongnam-do 31902 (KR)
(72) Inventor: JUNG, Haewon, Seosan-si Chungcheongnam-do 31904 (KR); KIM, Cheolhyun, Yongin-si Gyeonggi-do 16876 (KR); JUNG, Jinhwan, Seongnam-si Gyeonggi-do 13532 (KR)
(74) Representative: Angerhausen, Christoph
(86) International application number: PCT/KR2020/004410
(87) International publication number: WO 2021/132806

(57) **Abstract**

The present invention relates to a liquid/solid two-phase defoamer composition for reducing hydrocarbon foam and silicon carry-over, comprising a liquid polydimethylsiloxane and a solid silica powder, having effects of reducing the amount of foam generated during the thermal cracking reaction in a delayed coker and suppressing deactivation of catalysts by reducing the silicon carry-over to the subsequent processes.

## Description

### [FIELD OF THE INVENTION]

The present invention relates to a defoamer composition for reducing hydrocarbon foam, particularly a defoamer composition for reducing or inhibiting foam formation in a delayed coker reactor, more effectively compared to the conventional polydimethylsiloxane (PDMS) resins widely used for defoaming purposes, and also reducing the silicon carry-over to a process following the delayed coker reactor.

### [BACKGROUND OF THE INVENTION]

An important issue in the petroleum refining industry in recent years is to convert the introduced crude oil into as much usable oil and gas as possible. The most important facility to maximize conversion of the crude oil and the residue to oil and gas is the upgrading complex, and the upgrading rate, an index that refers to the ratio of the capacity of the upgrading complex divided by the capacity of the units for processing the atmospheric residue.

Refineries worldwide have actively introduced upgrading complexes to increase the upgrading rate for maximizing their profits.

Processes used in upgrading complexes are divided into hydrogen addition processes (residue hydrotreating, fixed-bed residue hydrocracking, slurry-phase hydrocracking, etc.) and carbon rejection processes (coking, solvent deasphalting, resid FCC, etc.) (Foams: Fundamentals and Applications in the Petroleum Industry; Schramm, L.; Advances in Chemistry; American Chemical Society: Washington, DC, 1994).

Among the carbon rejection processes, in particular, the delayed coking process converts heavy oil to low-molecular hydrocarbon gas, naphtha, gas oil, and coke under the conditions of 480-515°C of the furnace outlet temperature and 0.1-0.4 MPa of the pressure in the coke drum. It is a thermal cracking process that has economic advantages in the treatment of residual oil(The Canadian Journal of Chemical Engineering 85 1 (2007) 1, Fuel Processing Technology 104 (2012) 332, and Catalysis Today 220 (2014) 248).

In the delayed coking process, thermal cracking is carried out in coke drums. In the coke drum, the viscosity of the heavy oil changes, and thus, oil with a relatively low boiling point is vaporized and moves to the fractionator through piping. Gas-liquid separation is carried out in the process of vaporization of heavy oil in the coke drum, thereby generating foam which rises to the top of the coke drum. This foaming inevitably occurs in the coke drum (Foams: Fundamentals and Applications in the Petroleum Industry; Schramm, L.; Advances in Chemistry; American Chemical Society: Washington, DC, 1994).

If foam is continuously rising and foam-over from the coke drum to the fractionator or the overhead vapor line occurs, fouling caused by coke particles may occur not only in the piping but also in the suction screen under the fractionator, and more serious fouling may be incurred on the thermal heater tubes. In this case, all or some of units in the processes must be shut down to remove the fouling, and since it can greatly affect the overall throughput and profits of the refinery, the foam height inside the coke drum must be managed at an appropriate level.

In order to manage the foam height and minimize formation of the foam, a method of periodically or intermittently injecting silicone-based liquids, polydimethylsiloxane resins, into the coke drum as a foam reducing or inhibiting material has been generally used. Due to its thermal stability, this material is used to inhibit formation of the foam inside the coke drum. However, polydimethylsiloxane resin partially decomposes into low-molecular substances such as hexamethyldisiloxane (BP 100□), hexamethylcyclotrisiloxane (BP 134 □), and octamethylcyclopentasiloxane (BP 175□), etc., which have low boiling points, in the high temperature coke drum. As a result, a silicon carry-over, in which those siloxane-based materials with low boiling points are carried in delayed coker products (naphtha, light gas oil, heavy gas oil) of similar boiling points and transferred to the subsequent process. The presence of silicon component therein acts as a catalyst poison for heterogeneous metal catalysts, which is a major cause of deactivation and reduction of the life of the catalysts (C. R. Chimie 20 (2017) 55), and the silicon carry-over in the delayed coker causes deactivation of the catalysts in the downstream operating units.

The petroleum refining industry has recently increased the ratio of ultra-heavy crude oil and the throughput of the feedstock materials of delayed cokers to increase their profits. As a result, the amount of foam forming in the coke drum increased and the amount of polydimethylsiloxane resins injected in the coke drums increased as well to manage the increased foam, leading to accelerated silicon carryover to the subsequent process. Due to the above things, there may be a problem that the life of the catalysts used in the processes following the delayed coking process is also reduced.

In order to solve the above problems, a method of reducing the silicon carry-over in coker products by using crosslinked branched polydimethylsiloxane resins as defoamers or antifoamers for hydrocarbon-containing liquids is proposed in US Patent No. 7,427,350.

In addition, U.S. Patent No. 9,212,312 proposes a method of injecting a silicone anti-foam agent (e.g. polydimethylsiloxane resins) in a highly aromatic carrier fluid such as slurry oil into a coke drum.

### [SUMMARY OF THE INVENTION]

### [Problems to be Solved by the Invention]

It is an object of the present invention to provide a defoamer composition which can reduce or inhibit formation of the foam in a delayed coking reactor and further carry-over of the silicon material to the process following the delayed coke drum, more effectively as compared to the prior-art using polydimethylsiloxane (PDMS) as an anti-foam agent.

### [Means for Solving the Problems]

According to the present invention for achieving the above object, there is provided a liquid/solid two-phase defoamer composition comprising a liquid polydimethylsiloxane and a solid silica powder.

### [Advantageous Effects]

When the two-phase defoamer composition of the present invention is used, the amount of foam generated during the thermal cracking reaction in the delayed coker can be reduced, and at the same time, the silicon carry-over downstream can be reduced, thereby suppressing poisoning of the catalysts in downstream operating units.

The defoamer composition of the present invention has a synergistic effect of the two materials of liquid polydimethylsiloxane and solid silica powder on reducing or inhibiting the foam, and it has been confirmed that the amount of the foam produced was reduced, compared to the case of using the conventional commercially available anti-foaming agent. As it was effective in reducing or inhibiting the foam, the amount of the polydimethylsiloxane injected into the coke drum was reduced, compared to the prior art, thereby reducing the silicon carry-over downstream, and minimizing deactivation of catalysts in the subsequent processes. As a result, it is possible to obtain an effect of increasing the lifetime of the catalysts.

### [DETAILED DESCRIPTION OF THE INVENTION]

In the liquid/solid two-phase defoamer composition of the present invention comprising a liquid polydimethylsiloxane and a solid silica powder for use as an anti-foaming agent, there is a possibility that precipitation occurs, as the amount of the solid silica powder increases. Preferably, the two-phase defoamer composition of the present invention contains the solid silica powder in an amount of 0.01 to 1.0 parts by weight based on 100 parts by weight of the liquid polydimethylsiloxane. More preferably, the liquid/solid two-phase defoamer composition of the present invention contains the solid silica powder in an amount of 0.1 to 0.5 parts by weight based on 100 parts by weight of the liquid polydimethylsiloxane. Most preferably, the liquid/solid two-phase defoamer composition of the present invention contains the solid silica powder in an amount of 0.5 parts by weight based on 100 parts by weight of the liquid polydimethylsiloxane.

In the present invention, conventional polydimethylsiloxanes well known in the art as being used to reduce the hydrocarbon foam generated in the delayed coker, examples of which include, but limited to, linear polydimethylsiloxane, crosslinked polydimethylsiloxane, or a mixture thereof, may be utilized. Such polydimethylsiloxanes are described in US Pat. No. 7,427,350, contents of which are incorporated by herein reference in its entirety.

In the present invention, the liquid polydimethylsiloxane may be used alone, or a polydimethylsiloxane dispersed in a carrier fluid may be utilized.

Examples of the carrier fluid include, but not limited to, heavy gas oil produced in a delayed coker, light gas oil produced in the delayed coker, and light cycle oils, heavy cycle oils, slurry oils obtained in a catalytic cracking unit of a refinery, or mixtures of two or more thereof. Such carrier fluids are described in U.S. Patent No. 9,212,312, contents of which are incorporated by reference herein in its entirety.

Preferably, the solid silica powder has an average particle size of 10 *µ*m or less.

The liquid/solid two-phase defoamer composition of the present invention can be utilized for the purpose of reducing or inhibiting the foam in the processes of petroleum refineries and petrochemical industries, in which the hydrocarbon foam is generated, and is particularly effective in a coking process, most suitably, in the delay coking process.

Hereinafter, the present invention will be described in detail by illustrative examples thereof. However, the following examples are for illustrative purposes only, and thus it is to be noted that the scope of the present invention is not limited by these examples.

### Examples

In the following description of examples of the defoamer composition according to the present invention, two-phase defoamer compositions are prepared by adding a solid silica powder to a liquid polydimethylsiloxane (PDMS) as an antifoaming material in various ratios, and results obtained from tests of the products using a foam tester are presented and compared. In addition to that, thermal cracking test with using the two-phase defoamer composition is conducted in an environment similar to the actual delayed coker process conditions in order to determine the degree of silicon carry-over to the process subsequent to the delayed coker process, when the two-phase defoamer compositions are used and silicon contents in the liquid products are analyzed. After testing at laboratory scale, a test is carried out by applying the two-phase defoamer compositions to a commercial delayed coker process, and the effect and application of the two-phase defoamer compositions are presented based on the actual injection amounts thereof and the results of the silicon carry-over.

As examples of the present invention, two-phase defoamer compositions were prepared by adding a solid silica powder to a liquid polydimethylsiloxane conventionally used as an antifoaming agent by varying the amount of the solid silica powder. The particle size of the solid silica powder was less than 10 *µ*m and the molecular weight of the liquid polydimethylsiloxane was 60,000 cst.

### Test methods

A foam test equipment was prepared to verify the effect of reducing the foam formation of the two-phase defoamer compositions of the present invention and PDMS. A foam generating equipment, consisting of a water bath, two 1 liter measuring cylinders, two tubes with a foam generating sponge head, two external pumps, and two flow controllers, was also used for the tests, which were performed as follows;

Lube base oil that is capable of generating foam and antifoaming agents are put into the measuring cylinders in the water bath. The foam generating sponge is submerged in the solution in each of the measuring cylinders and the foam generating sponge tubes are connected to the external pump. By injecting air into the measuring cylinders at a constant flow rate for the same period of time using the external pumps, the amounts of the foam formed through the foam generating sponges are measured by volume.

The tests were conducted according to the ASTM-892 method, as follows:
After a predetermined amount of the antifoaming agents were added to the lube base oil in the measuring cylinder, dispersed and stabilized. After the stabilization, foam was generated under the conditions of 5 minutes of the operation time and an air flow rate of 90 ml/min of the external pump, and the volume of the generated foam was observed. Based on the above conditions, the amounts of the generated foams were measured and compared with each other by changing the amounts of the solid silica powder in the two-phase defoamer compositions in the same manner.

Silicon contents in the liquid products obtained through the fractionator after the thermal cracking were analyzed using a 1 liter batch reactor to simulate the reduction of the silicon carry-over to the process following the delayed coking process.

The thermal cracking continued for two hours, after adding a predetermined amount of the antifoaming agent to 200 g of a vacuum residue in the batch reactor and raising the temperature inside the batch reactor to 450□. The silicon content in the liquid product obtained through the fractionator was determined by an induced coupled plasma equipment (ICP-OES) according to the UOP 796 method.

A field trial was carried out by adjusting the amounts of the two-phase defoamer compositions (adding 0.5 parts by weight of a solid silica powder to 100 parts by weight of a liquid polydimethylsiloxane) and a polydimethylsiloxane to the four coke drums according to the degree of foam rise in the respective coke drums, and injecting them for the same one single cycle. During the period of the time of the test, the compositions and throughputs of the feedstock in the delayed cokers were the same. To check the silicon carry-over, the liquid products of the delayed coking process, i.e. naphtha, light gas oil, and heavy gas oil, were sampled at intervals of 2 hours, and the silicon contents therein were comparatively analyzed by an induced coupled plasma equipment (ICP-OES) according to the UOP 796 method.

### Example 1

A two-phase defoamer composition according to the present invention was prepared by the following method

The solid silica powder was mixed with the polydimethylsiloxane at a ratio of 0.1 parts by weight of the solid silica powder based on 100 parts by weight of the polydimethylsiloxane in a 50 ml vial and dispersed for 1 minute at room temperature using an ultrasonicator.

The two-phase defoamer composition thus prepared will be referred to as the PDMS/0.1 pbw solid silica powder.

After putting 150 ml of lube base oil and 15 µl of the defoamer composition PDMS/0.1 pbw solid silica powder prepared by the above method into a 1 liter measuring cylinder in a water bath at 25□, the dispersion and stabilization process of the two-phase defoamer composition was performed for 10 minutes. Thereafter, the external pump was operated to generate the foam through the sponge submerged in the lube base oil solution for 5 minutes at an air flow rate of 90 ml/min. After 5 minutes therefrom, the amount of foam, generated until the operation of the external pump was stopped, was measured, and the foam reduction rate was calculated, and the results are shown in Table 1 below.

### Example 2

A two-phase defoamer composition was prepared in the same manner as Example 1, except that the amount of the added solid silica powder was increased to 0.5 parts by weight. The resulting two-phase defoamer composition will be referred to as the PDMS/0.5 pbw solid silica powder.

After generating the foam for 5 minutes in the same manner as Example 1, the amount of the generated foam was measured using the foam test equipment, and the foam reduction rate was calculated, and the results are presented in Table 1 below.

### Example 3

To confirm the reduction of silicon carry-over to the process following the delayed coker process, thermal cracking of a mixture of 2.513 g of the PDMS/0.5 pbw solid silica powder and 200 g of the vacuum residue as a feedstock was conducted in a 1 liter batch-type reactor.

The reaction conditions of the batch-type reactor of 100 rpm of the stirring speed and 200°C of the temperature raised from room temperature and then maintained for 1 hour were employed so that the two-phase defoamer composition and the feedstock were homogeneously mixed.

After that, the stirring was stopped and the temperature inside the reactor was raised to 450°C. After the temperature inside the reactor reached 450°C, thermal cracking of the mixture was performed for 2 hours.

After completion of the reaction, the coke produced exists in the reactor, and the product was separated into a gaseous phase and a liquid phase by a fractionator. A certain amount of the separated liquid product sample was collected, and the silicon content was measured through the UOP 796 method using the induced coupled plasma equipment (ICP-OES), and the results are shown in Table 2 below.

### Comparative Example 1

In order to compare the amounts of foams generated, when any antifoaming agent is not added to the lube base oil and a single-phase defoamer or two-phase defoamer composition is added thereto, the amount of the foam generated without any defoamer added to the lube base oil was measured.

The test was carried out using the foam testing equipment in the same manner as Example 1 described above, and the amount of the foam generated is given in Table 1 below.

### Comparative Example 2

In order to compare the amounts of foams generated by adding polydimethylsiloxane, a single-phase foam reducing substance, and the two-phase defoamer composition, only a polydimethylsiloxane was added to the lube base oil and the foam generated thereby was measured by using the foam test equipment.

The test was made using the foam test equipment in the same manner as Example 1 described above, and the amount of the foam generated as such is shown in Table 1 below.

### Comparative Example 3

In order to compare the degree of reduction of the silicon carry-over to the process following delayed coking process, a thermal cracking reaction was performed in a 1 liter batch-type reactor with 2.5 g of polydimethylsiloxane, a single-phase foam reducing material, and 200 g of the vacuum residue as a feedstock.

The thermal cracking was performed in the same manner as Example 3 specified above, and the results are shown in Table 2 below.

**[Table 1]**

| | Antifoaming agents | Amounts of foams generated (ml) | ^{∗}Reduction rate (Weight %) |
|---|---|---|---|
| Example 1 | PDMS/0.1 pbw solid silica powder | 35 | 50 |
| Example 2 | PDMS/0.5 pbw solid silica powder | 25 | 64 |
| Comparative Example 1 | - | 510 | - |
| Comparative Example 2 | PDMS | 70 | 0 |
| ^{∗}Reduction rate =(amount of the foam generated from the Comparative Example 2 - amount of the foam generated from Example 1 or 2) / (amount of the foam generated from the Comparative Example 2) x 100 | | | |

**[Table 2]**

| | Antifoaming agents | Amount used (g) | Si content in liquid product (wt ppm) |
|---|---|---|---|
| Example 3 | PDMS/0.5 pbw solid silica powder | 2.513 | 2,397 |
| Example 4 | PDMS/0.5 pbw solid silica powder | 1.258 | 1,284 |
| Comparative Example 3 | PDMS | 2.501 | 2,505 |

### Example 5

In this Example 5, the PDMS/0.5 pbw solid silica powder, a two-phase defoamer composition, was injected in the amounts according to the rising degrees of the foam.

When the heights of the foam layers in the coke drum were higher than 0, 20, 40, 60, or 70% of the initial height of the space in the cocker drum, the injection flow rates of the antifoaming agent were adjusted to 15.0 L/hr, 25.0 L/hr, 40.0 L/hr, 60.0 L/hr, and 100.0 L/hr, respectively. The total amounts of the antifoaming agents injected during the period of one cycle are presented in Table 3 below. The test was conducted by continuously switching four coke drums one to another for 24 hours, and during the test, the properties of the feedstock and operating conditions were managed to be at the same levels as possible.

### Example 6

In this Example 6, when the PDMS/0.5 pbw solid silica powder, a two-phase defoamer composition, was injected in the amounts according to the rising degrees of the foam in a commercial-scale delayed coking process, the silicon concentration in the liquid product produced from the delayed coker were determined and is shown in Table 3. The liquid product was fractionated into naphtha (NAPH.), light gas oil (LGO), and heavy gas oil (HGO) in the fractionator after the thermal cracking in the coke drum. Each of the products separated as above was sampled at intervals of two hours for a day. The silicon contents were measured using the induced coupled plasma equipment (ICP-OES). The measurement was performed according to the UOP 796 method, and the analysis results are presented in Table 3.

### Comparative Example 4

In this Comparative Example 4, the polydimethylsiloxane, a single-phase antifoaming agent, was injected into a commercial-scale delayed coking process in the amounts according to the rising degrees of the foam. The injection criteria and test conditions were the same as in Example 5, and the test of the effect of the agent of the comparative example 4 was performed by switching four coke drums for 24 hours in succession after the test of the antifoaming agent of the Example 5. The injection amount of the antifoaming agent is indicated in Table 3 and compared with the dofoamer of Example 5.

### Comparative Example 5

In this Comparative Example 5, when the polydimethylsiloxane, a single-phase antifoaming agent, was injected in the amounts according to the rising degrees of the foam in a commercial-scale delayed coking process, the silicon concentration in the liquid product produced from the delayed coker was measured and is shown in Table 3. Sampling of the liquid product and silicon content analysis were performed in the same manner as for Example 6, and were compared with the results of Example 6.

**[Table 3]**

| | | PDMS | PDMS/0.5 pbw solid silica powder | Effects of reduction | Remarks |
|---|---|---|---|---|---|
| Amount injected (liter/cycle) | | 602.8 | 478.5 | 21% | Comp. Ex. 4 and Ex. 5 |
| Si carry-over (wt ppm) | NAPH. | 40.5 | 37.6 | 7% | Comp. Ex. 5 and Ex. 6 |
| | LGO | 32.5 | 26.8 | 18% | Comp. Ex. 5 and Ex. 6 |
| | HGO | 6.1 | 5.2 | 15% | Comp. Ex. 5 and Ex. 6 |

As can be seen from Table 1 showing the result of measuring the amounts of the foams generated, the two-phase defoamer or antifoaming agent compositions of Example 1 and Example 2 of the present invention show excellent effects in reducing or inhibiting formation of foams, compared to the case, when any antifoaming agent was not used (Comparative Example 1), or the case, where the polydimethylsiloxane was used alone as a foam reducing material (Comparative Example 2). In particular, when the solid silica powder was used in an amount of 0.5 parts by weight based on 100 parts by weight of the polydimethylsiloxane for preparing the two-phase defoamer composition (Example 2), the best foam reduction or defoaming efficiency was demonstrated. As can be seen from Table 2, showing the silicon content in the liquid product in case of Example 3, the silicon content in the liquid product after the thermal cracking reaction, when the solid silica powder was added to the polydimethylsiloxane and used as a foam reducing material, was similar to that in Comparative Example 3 for which any solid silica powder was not used. This shows that the presence of solid silica powder in the defoamer composition and the silicon carry-over have nothing to do with each other.

That means the solid silica powder is stable and does not decompose during the thermal cracking reaction. In addition, it was confirmed from Table 1 that the foam reduction performance was excellent through the addition of the solid silica powder, and when the amount of the defoamer composition used was reduced as shown in Table 1 for Example 4, it was confirmed that the silicon content in the liquid product was also reduced.

Based on the results of tests of Examples 1 to 4 and Comparative Examples 1 to 3, the amounts of the antifoaming agents used are shown in Table 3, when the two-phase defoamer compositions of Examples 5 and 6 and a single-phase foam reducing material, the polydimethylsiloxane, of Comparative Examples 4 and 5, were applied in a commercial delayed coker process. From Table 3, it was confirmed that in the case of using the two-phase defoamer composition, to which 0.5 parts by weight of the solid silica powder was added, the amount of injection of the antifoaming agent was reduced by 21% during the same cycle, compared to the case of using the polydimethylsiloxane alone.

Since the operating conditions of the delayed cocker were the same for the two cases during the test period, the amount of the foam generated in the coke drum can be considered constant, and the less injection amount of the foam reducing material can be said to demonstrate the excellence in the foam reduction efficiency of the material concerned.

Although there is a difference between the result of the foam reduction efficiency test, 64%, for the composition of Example 2, which was conducted in the laboratory and the result of the test conducted in a commercial process as described above for Example 5, it is understood that the difference came from the significantly severe environment of the commercial process compared to that of the laboratory test, and the difficulty in weighing the relative importance between the efficiency of reducing formation of the foam and the reduction rate of the injected antifoaming agents in the two test environments..

In addition, in the commercial process test, it was confirmed that the silicon carry-over was in proportion to the injection amount of the foam reducing material, PDMS. This is a result similar to the laboratory test result (see Table 2). It can be seen that the amount of injection of the two-phase defoamer composition was reduced due to the improved foam reduction performance thereof and the amount of silicon contained in the liquid product of the delayed coker, which was carried over to the subsequent process, was reduced. This further shows that it can contribute to prolonging the life of the catalysts by reducing the influence of silicon acting as a catalyst poison in the subsequent processes.

## Claims

1. A liquid/solid two-phase defoamer composition for reducing hydrocarbon foam and silicon carry-over, comprising a liquid polydimethylsaloxane and a solid silica powder.

2. The two-phase defoamer composition according to claim 1, wherein the solid silica powder is contained in an amount of 0.01 to 1.0 parts by weight based on 100 parts by weight of the liquid polydimethylsaloxane.

3. The two-phase defoamer composition according to claim 1, wherein the solid silica powder is contained in an amount of 0.1 to 0.5 parts by weight based on 100 parts by weight of the liquid polydimethylsaloxane.

4. The two-phase defoamer composition according to claim 1, wherein the polydimethylsaloxane is linear polydimethylsaloxane, crosslinked polydimethylsaloxane, or a mixture thereof.

5. The two-phase phase according to any one of claims 1 to 3, wherein the liquid polydimethylsaloxane is polydimethylsaloxane alone or a polydimethylsaloxane dispersion in which polydimethylsaloxane is dispersed in a carrier fluid.

6. The two-phase phase according to claim 4, wherein the carrier fluid is a heavy gas oil produced in a delayed coker, a light gas oil produced in a delayed coker, a light cycle oil produced in a catalytic cracking device of a refinery, a heavy cycle oil, a slurry oil, or a mixture of two or more thereof.

7. The two-phase defoamer composition according to claim 1, wherein the solid silica powder has an average particle size of 10 *µ*m or less.
